# EUROPÄISCHE PATENTSCHRIFT

(11) **EP 1 800 814 B1**
(45) Veröffentlichungstag und Bekanntmachung des Hinweises auf die Patenterteilung: **26.03.2008**
(21) Anmeldenummer: 06025391.1
(22) Anmeldetag: 08.12.2006
(51) Int. Cl.: B27D 5/00, B08B 3/04, B29C 65/00

(54) **Vorrichtung und Verfahren zum Anleimen eines Streifens an die Kante einer Platte**
Apparatus and process for gluing a strip to a plate edge
Dispositif et procédé pour coller une bande au bord d'une plaque

(30) Priorität: 20.12.2005 DE 102005061245
(43) Veröffentlichungstag der Anmeldung: 27.06.2007
(73) Patentinhaber: Henkel Kommanditgesellschaft auf Aktien, 40589 Düsseldorf (DE); Elektrobau Wehrmann GmbH, 31582 Nienburg (DE)
(72) Erfinder: Walter, Heinz-Gerd, 50354 Hürth (DE); Wehrmann, Günter, 31582 Nienburg (DE)

(56) Entgegenhaltungen:
- WO-A-03/070438
- DE-B- 1 084 469
- DE-U1- 20 314 849
- DE-U1- 29 709 780

## Beschreibung

Die vorliegende Erfindung betrifft eine Vorrichtung und ein Verfahren zum Anleimen eines Kunststoff- oder Furnierstreifens an die Kante einer - vorzugsweise beschichteten - Platte aus Kunststoff, Holz oder Holzwerkstoff in einem Durchlaufverfahren.

Bei der Herstellung von Platten aus Kunststoff, Holz oder Holzwerkstoff, besonders wenn diese Platten auf einer oder beiden Breitseiten eine Kunststoffbeschichtung tragen, werden in den meisten Fällen die Seiten mit Kunststoff- oder Furnierkanten bzw. -streifen beleimt. Die anzuleimenden Kantenstreifen haben zum Ausgleich der Toleranzen bei den Plattenstärken einen geringen Überstand, der nach dem Verleimen mit der Platte oben und unten bündig abgefräst wird. Zum Anleimen dieser Furnier- oder Kunststoffkanten werden diese Kantenstreifen und/oder die damit zu beschichtenden Kanten der Platte mit einem Leim oder Klebstoff versehen. In Durchlaufanlagen wird der Kantenstreifen der durchlaufenden Platte zugeführt und mittels eines Andruckelements, beispielsweise einer Andruckrolle oder eines Gleitschuhs, an die Kante der Platte angepresst. Damit beim Anpressen an die Kante eine dichte Fuge erreicht wird, wird ein solcher Überschuss von Leim oder Klebstoff (im folgenden unter "Leim" zusammengefasst) auf den Streifen und/oder die Kante aufgebracht, dass beim Anpressen überschüssiger Leim aus der Fuge herausgepresst wird. Hierdurch verbleiben Leimreste auf der Platte, die beim anschließenden Abfräsen des Überstands noch mit Frässpänen bedeckt oder vermischt werden. Diese an der Breitseite der Platte anhaftenden Leimreste und Frässpäne müssen in einem Reinigungsvorgang wieder entfernt werden.

Zum erleichtern dieses Reinigungsschrittes schlägt das deutsche Gebrauchsmuster DE 297 09 780 U1 vor, vor dem Streifenzulauf eine Sprüheinrichtung vorzusehen, mit der ein flüssiges Trennmittel auf den ober- und unterseitigen Kantenbereich der jeweiligen Plattenbreitseite aufsprühbar ist. Das Trennmittel verhindert das Verkleben der Leimreste mit den Plattenbreitseiten und erleichtert so die nachfolgende Reinigung. Gemäß der Offenbarung dieses Gebrauchsmusters wird die Sprüheinrichtung für den Auftrag des Trennmittels mit Druckluft betrieben. Hierdurch erfolgt eine Zerstäubung des Trennmittels, so dass eine sehr feine nebelartige Verteilung auf der entsprechenden Plattenoberfläche möglich ist.

Demgegenüber stellt sich die vorliegende Erfindung die Aufgabe, das Trennmittel kontrollierter und in einem besser eingrenzbaren Bereich auf die Plattenbreitseiten aufzubringen. Analoges gilt für einen Auftrag von Reinigungsmittel auf die Plattenbreitseite, mit dessen Hilfe die aus der Fuge ausgepressten Leimreste sowie die Frässpäne entfernt werden sollen. Weiterhin soll es durch die vorliegende Erfindung möglich sein, ggf. auch das Andruckelement gezielt mit Trenn- oder Reinigungsmittel zu beaufschlagen.

Gegenstand der vorliegenden Erfindung ist in einem ersten Aspekt eine Vorrichtung zum Anleimen eines Kunststoff- oder Furnierstreifens an die Kante einer Platte aus Kunststoff, Holz oder Holzwerkstoff im Durchlaufverfahren, mit einem Streifenzulauf und einem - in Transportrichtung gesehen - nachgeordneten Andruckelement, die eine oder mehrere Auftragseinrichtung(en) für Trenn- oder Reinigungsmittel aufweist, mit der ein Trenn- oder Reinigungsmittel auf den ober- und unterseitigen Kantenbereich der jeweiligen Plattenbreitseite und/oder auf das Andruckelement aufgetragen werden kann, wobei die Auftragseinrichtung so ausgestaltet ist, dass das Trenn- oder Reinigungsmittel in einem Streifen mit vorwählbarer Breite kantenbündig auf den ober- und unterseitigen Kantenbereich der jeweiligen Plattenbreitseite und/oder auf das Andruckelement aufgetragen werden kann. Wenn hierbei von "ober- und unterseitig" die Rede ist, wird von einer waagrechten Lagerung der Platte ausgegangen. Ist die Platte senkrecht gelagert, ist "ober- und unterseitig" sinngemäß durch "rechten und linken" zu ersetzten.

Unter "Andruckelement" wird hierbei eine Vorrichtung verstanden, mit der der Kunststoff- oder Furnierstreifen an die Kante der Platte angepresst werden kann. Dieses Andruckelement kann beispielsweise eine Andruckrolle oder einen Andruckschuh (Gleitschuh) darstellen.

Dabei ist die genannte Platte aus Kunststoff, Holz oder Holzwerkstoff vorzugsweise beschichtet, insbesondere kunststoffbeschichtet. Die vorwählbare Breite, in der das Trenn- oder Reinigungsmittel auf den ober- und unterseitigen (bzw. rechten und linken) Kantenbereich der Plattenbreitseite aufgetragen werden soll, wird am besten anhand von Betriebserfahrung oder in Betriebsversuchen festgelegt. Bei dem Auftrag von Trenn- oder Reinigungsmittel auf das Andruckelement wählt man die vorwählbare Breite vorzugsweise so, dass sie der Breite des Andruckelements entspricht.

Dabei ist die erfindungsgemäße Vorrichtung so ausgestaltet, dass die Auftragseinrichtung eine Düse und eine Auftragshilfe aufweist, so dass das Trenn- oder Reinigungsmittel aus der Düse auf oder in die Auftragshilfe übertreten kann. Die Auftragshilfe berührt hierbei die Oberfläche der Platte oder des Andruckelements. Das Trenn- oder Reinigungsmittel wird also nicht unkontrolliert versprüht oder vernebelt, sondern durch die Auftragshilfe gezielt in einem Streifen definierter Breite auf die Oberfläche der Platte oder der Andrucksrolle aufgetragen. Vorzugsweise weist hierbei die Düse eine schlitzförmige Öffnung auf, so dass das Trenn- oder Reinigungsmittel bereits entlang eines Streifens auf die Auftragshilfe übertragen wird.

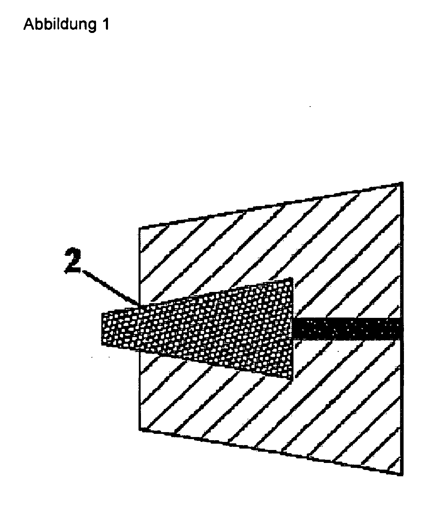

Vorzugsweise hat die Auftragseinrichtung einen metallischen Grundkörper, der mit einer schwalbenschwanzförmigen Nut versehen ist. In diese kann die Auftragshilfe, beispielsweise ein Mikrofaserstreifen, eingesetzt werden. Bei dieser Anordnung ist die Auftragshilfe leicht auswechselbar. Über einen vorzugsweise schlitzförmigen Kanal (Düse) kann die Auftragshilfe mit dem Trenn- oder Reinigungsmittel benetzt werden. Abbildung 1 zeigt diese beispielhafte Ausführungsform schematisch. Vorzugsweise verfügt die Düse über eine Vorrichtung zum Regulieren der Durchflussmenge bzw. zum Unterbrechen des Durchflusses des Trenn- oder Reinigungsmittels.

Das Trenn- oder Reinigungsmittel kann in einer Ausführungsform wie vorstehend beschrieben aus der Düse auf die Auftragshilfe übertreten und durch die Auftragshilfe auf die Platte oder das Andruckelement übertragen werden. Eine alternative Ausführungsform besteht darin, dass aus der - vorzugsweise schlitzförmigen - Düse das Trenn- oder Reinigungsmittel zunächst auf die Platte oder das Andruckelement aufgetragen und anschließend durch die Auftragshilfe aufgenommen und definiert verteilt wird.

Die Auftragshilfe ist vorzugsweise so ausgebildet, das sie Flüssigkeit aufnehmen und wieder abgeben kann, wobei zur Abgabe ein gewisser mechanischer Druck erforderlich sein kann. Die Auftragshilfe kann beispielsweise als Bürste oder Pinsel ausgestaltet sein. Sie kann aber auch einen Schwamm, ein Vlies, ein Gewirke, einen Filz oder allgemein ein textiles oder faseriges Flächengebilde darstellen. Insbesondere ist als Auftragshilfe ein Mikrofaserstreifen geeignet. Abhängig von der Viskosität des Trenn- oder Reinigungsmittels können Fasern mit unterschiedlichen Dichten eingesetzt werden, um einen gleichmäßigen Feuchtigkeitsgrad an der Faseroberfläche zu erhalten.

Vorzugsweise gestaltet man die erfindungsgemäße Vorrichtung so aus, dass die Auftragseinrichtung federnd mit einem einstellbaren Anpressdruck auf der Platte oder dem Andruckelement aufliegt. Durch den einstellbaren Anpressdruck kann die Menge an Trenn- oder Reinigungsmittel gesteuert werden, die aus der Auftraghilfe auf die Platte oder das Andruckelement übertritt. Falls im Produktionsverlauf, beispielsweise bei Plattenwechsel, die Auftragseinrichtung von der Oberfläche der Platte oder der Auftragsrolle abhebt und hierdurch der Anpressdruck verschwindet, tritt kein Trenn- oder Reinigungsmittel aus der Auftragseinrichtung aus. Vorzugsweise sorgt man zusätzlich dafür, dass beim Verschwinden des Anpressdrucks die Düse automatisch geschlossen wird, so dass kein weiteres Trenn- oder Reinigungsmittel austritt und/oder auf die Auftragshilfe übergeht. Dies verhindert ein unkontrolliertes Verschmutzen durch ein unnötiges Austreten von Trenn- oder Reinigungsmittel.

Vorzugsweise sieht man an der erfindungsgemäßen Vorrichtung einen Behälter vor, der das Trenn- oder Reinigungsmittel enthält und aus dem dieses Mittel beispielsweise durch Pumpen zur Auftragseinrichtung befördert wird. Dieser Behälter kann auch als Druckbehälter ausgeführt sein. In diesem Fall kann die Förderung des Trenn- oder Reinigungsmittels zur Auftragseinrichtung durch die Einwirkung des Drucks im Druckbehälter erfolgen. Dieser (Druck-) Behälter wird seinerseits manuell oder automatisch über eine Förderpumpe oder bei entsprechender räumlicher Anordnung unter Einwirkung der Schwerkraft aus dem Liefergebinde für das Trenn- oder Reinigungsmittel gefüllt.

Eine spezielle Ausführungsform der vorliegenden Erfindung besteht darin, dass die Auftragseinrichtung zum Auftragen eines Trennmittels auf die Plattenbreitseite dient. In diesem Fall ist die Auftragseinrichtung in Transportrichtung der Platte gesehen vor dem Andruckelement angeordnet. In einer weiteren Ausführungsform dient die Auftragseinrichtung zum Auftragen eines Trenn- oder Reinigungsmittels auf das Andruckelement und ist so angeordnet, dass die Auftragshilfe auf dem Andruckelement aufliegt. In diesem Fall weist die Auftragseinrichtung vorzugsweise zusätzlich eine Abstreifkante auf. Mit dieser werden Leimreste von dem Andruckelement entfernt.

In einer weiteren Ausführungsform dient die Auftragseinrichtung zum Auftragen eines Reinigungsmittels auf die Platte. In diesem Fall ist die Auftragseinrichtung so angeordnet, dass das Reinigungsmittel in Transportrichtung der Platte gesehen nach dem Andruckelement aufgetragen wird. Dies kann vor und/oder nach dem Fräser der Fall sein. Bringt man mit der Auftragseinrichtung ein Reinigungsmittel vor dem Fräser auf die Platte auf, kann es vorteilhaft sein, das Reinigungsmittel so zu wählen, dass es gleichzeitig antistatische Eigenschaften hat, d. h. eine elektrische Aufladung der Platte und/oder der Frässpäne verhindert. Dies kann den nachfolgenden Reinigungsschritt erleichtern.

Zum Entfernen der Leimreste und der Frässpäne von der Plattenoberfläche können für diesen Zweck bekannte Einrichtungen wie beispielsweise Reinigungslappen, rotierende Bürsten oder Schwabbelscheiben eingesetzt werden. Diese können mit einem Reinigungsmittel benetzt werden, was vorzugsweise über eine Sprühdüse erfolgt. Selbstverständlich, wenn auch weniger bevorzugt, ist auch eine manuelle Reinigung beispielsweise durch Abwischen möglich.

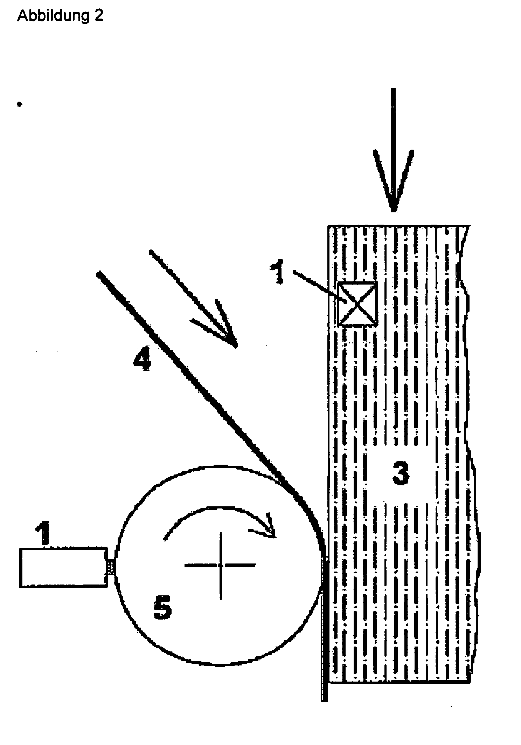

Abbildung 2 zeigt eine Ausführungsform der erfindungsgemäßen Vorrichtung mit Blick auf die Breitseite der Platte (3), an deren Kante ein Furnierstreifen (4) angeleimt werden soll. Der Furnierstreifen wird mit dem Andruckelement, hier beispielsweise einer Andruckrolle (5) an die Kante der Platte (3) angepresst und verleimt. In Bewegungsrichtung der Platte (Pfeil) vor der Andruckrolle ist an der Plattenbreitseite eine vorstehend beschriebene Auftragseinrichtung (1) mit einer Auftragshilfe (beispielsweise gemäß Abb. 1) vorgesehen, mit der ein Trennmittel auf die Plattenbreitseite aufgetragen wird. Eine weitere Auftragseinrichtung (1) ist an der Andruckrolle vorgesehen, mit der ein Trenn- oder Reinigungsmittel auf die Andruckrolle aufgebracht wird.

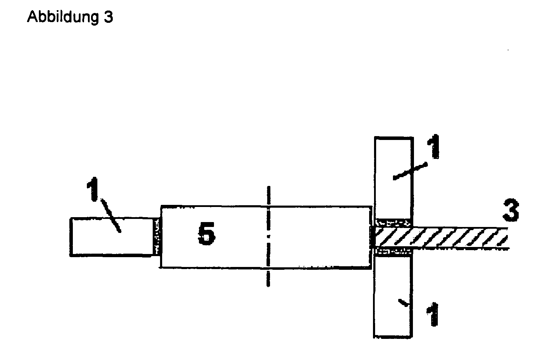

Abbildung 3 zeigt dieselbe Einrichtung wie Abbildung 2 mit Blickrichtung auf die in Bewegungsrichtung der Platte (3) liegende Plattenkante.

Ein weiterer Gegenstand der vorliegenden Erfindung besteht in einem Verfahren zum Anleimen eines Kunststoff- oder Furnierstreifens an die Kante einer Platte aus Kunststoff, Holz oder Holzwerkstoff im Durchlauf, wobei der Kunststoff- oder Furnierstreifen mit Hilfe eines Klebstoffs mit der Kante verbunden und mit einem Andruckelement an die Kante angepresst und anschließend ein über die Kante überstehender Teil des Kunststoff- oder Furnierstreifens mit einem Fräser abgefräst wird, wobei man zur Durchführung dieses Verfahrens eine Vorrichtung wie vorstehend beschrieben einsetzt.

Hierbei gelten die vorstehenden Ausführungen zum Aufbau der Platte, Heranführen und Anleimen des Kunststoff- oder Furnierstreifens sowie zum Auftrag des Trenn- oder Reinigungsmittels entsprechend.

Für das erfindungsgemäße Verfahren bieten sich unterschiedliche Ausgestaltungsmöglichkeiten an, die den vorstehend beschriebenen unterschiedlichen Ausgestaltungen der erfindungsgemäßen Einrichtung entsprechen. Demnach kann man zur Durchführung des Verfahrens eine Vorrichtung nach Anspruch 6 einsetzen und hiermit auf die Plattenbreitseite kantenbündig einen Streifen eines Trennmittels auftragen, bevor der Kunststoff- oder Furnierstreifen durch das Andruckelement an die Kante der Platte angepresst wird. Oder man gestaltet das Verfahren so aus, dass man eine Vorrichtung nach Anspruch 7 einsetzt und hiermit ein Trenn- oder Reinigungsmittel auf das Andruckelement überträgt. Oder man verwendet eine Vorrichtung nach Anspruch 8 und trägt hiermit auf die Breitseite der Platte nach Anpressen des Kunststoff- oder Furnierstreifens durch das Andruckelement einen Streifen eines Reinigungsmittels auf die Plattenbreitseite auf. Dies kann nach Anpressen des Kunststoff- oder Furnierstreifens mit dem Andruckelement, aber vor dem Abfräsen des über die Kante überstehenden Teils des Kunststoff- oder Furnierstreifens mit einem Fräser erfolgen. In diesem Fall wählt man - wie ebenfalls vorstehend beschrieben - vorzugsweise ein Reinigungsmittel, das gleichzeitig antistatische Eigenschaften aufweist. Zusätzlich oder stattdessen kann man das Reinigungsmittel nach dem Abfräsen des über die Kante überstehenden Teils des Kunststoff- oder Furnierstreifens auf die Breitseite der Platte auftragen.

Auf der Platte abgelagerte Leimreste sowie Frässpäne werden dann wie im Stand der Technik bekannt entweder manuell oder mit üblichen Einrichtungen wie beispielsweise Reinigungslappen, rotierenden Bürsten oder Schwabbelscheiben entfernt. Vorzugsweise werden diese mit einem Reinigungsmittel benetzt, was beispielsweise über eine Sprühdüse erfolgen kann.

Die vorliegende Erfindung ermöglicht es, das Trenn- oder Reinigungsmittel mit vorwählbarer und einstellbarer Auftragbreite auf das Andruckelement und/oder die Plattenbreitseite aufzubringen. Gegenüber einem (schwerer zu kontrollierenden) Versprühen oder Vernebeln wird Material eingespart und/oder ein ungewolltes Verschmutzen der Produktionsumgebung mit Trenn- oder Reinigungsmittel vermieden. Insbesondere wird im Vergleich zu einem Aufsprühen des Trennmittels vermieden, dass sich Trennmittel auf der zu verleimenden Kante niederschlagen und die Verleimung stören kann. Da keine Vernebelung oder gar Aerosolbildung des Trenn- oder Reinigungsmittels erfolgen muss, verringert sich die Gefahr, dass das Bedienungspersonal in Hautkontakt mit dem Trenn- oder Reinigungsmittel kommt oder gar Tröpfchen dieser Mittel einatmet. Dies verringert die Möglichkeit einer Belästigung oder Gesundheitsgefährdung.

In der erfindungsgemäßen Vorrichtung bzw. dem erfindungsgemäßen Verfahren können Trenn- oder Reinigungsmittel eingesetzt werden, die für diesen Zweck im Stand der Technik bekannt sind. Beispiele derartiger Mittel sind in den deutschen Gebrauchsmustern DE 203 14 849 U1 und DE 297 06 926 U1 genannt.

Wenn nach dem Anleimen des Kanten- oder Furnierstreifens nicht lackiert werden soll, kann ein Trennmittel beispielsweise folgende Zusammensetzung aufweisen:
1 - 15 Gew.-% Silikonöl, beispielsweise vom Typ Polydimethylsiloxan,
35 - 94 Gew.-% bei Raumtemperatur flüssige Kohlenwasserstoffe, beispielsweise ein Gemisch isoparaffinischer Kohlenwasserstoffe,
5 - 50 Gew.-% Alkoxyalkohol.

Wenn nach dem Anleimen des Kanten- oder Furnierstreifens lackiert werden soll, kann ein Trennmittel beispielsweise folgende Zusammensetzung aufweisen:
1 - 15 Gew.-% Fettsäureester, beispielsweise Isobutylester,
35 - 94 Gew.-% bei Raumtemperatur flüssige Kohlenwasserstoffe, beispielsweise ein Gemisch isoparaffinischer Kohlenwasserstoffe,
5 - 50 Gew.-% Alkoxyalkohol.

### Abbildungsunterschriften

### Abbildung 1:

Schematischer Querschnitt durch eine Auftragseinrichtung mit einem Grundkörper, in dessen Nut eine Auftragshilfe (2) eingesteckt ist. Diese wird durch den schwarz gezeichneten Kanal mit Trenn- oder Reinigungsmittel benetzt.

### Abbildung 2:

Beispielhafte Ausführungsform der erfindungsgemäßen Vorrichtung mit Blick auf die Breitseite der Platte (3), an deren Kante ein Furnierstreifen (4) angeleimt werden soll. Der Furnierstreifen wird mit dem Andruckelement, hier einer Andruckrolle (5) an die Kante der Platte (3) angepresst. In Bewegungsrichtung der Platte (Pfeil) vor der Andruckrolle ist an der Plattenbreitseite eine Auftragseinrichtung (1) mit einer Auftragshilfe vorgesehen, mit der ein Trennmittel auf die Plattenbreitseite aufgetragen wird. Eine weitere Auftragseinrichtung (1) ist an der Andruckrolle (5) vorgesehen.

### Abbildung 3:

Dieselbe Einrichtung wie Abbildung 2 mit Blickrichtung auf die in Bewegungsrichtung der Platte (3) liegende Plattenkante.

In allen Abbildungen bedeuten die Bezugszeichen:
(1) Auftragseinrichtung mit eingesetzter Auftragshilfe
(2) Auftragshilfe (hier beispielhaft ein Mikrofaserstreifen)
(3) Platte
(4) Furnier- oder Kantenstreifen
(5) Andruckelement, hier beispielsweise eine Andruckrolle

## Patentansprüche

1. Vorrichtung zum Anleimen eines Kunststoff- oder Furnierstreifens an die Kante einer Platte aus Kunststoff, Holz oder Holzwerkstoff im Durchlaufverfahren, mit einem Streifenzulauf und einem - in Transportrichtung gesehen - nachgeordneten Andruckelement, die eine oder mehrere Auftragseinrichtung(en) für Trenn- oder Reinigungsmittel aufweist, mit der ein Trenn- oder Reinigungsmittel auf den ober- und unterseitigen Kantenbereich der jeweiligen Plattenbreitseite und/oder auf das Andruckelement aufgetragen werden kann, **dadurch gekennzeichnet, dass** die Auftragseinrichtung (1) eine Düse und eine Auftragshilfe (2) aufweist, so dass das Trenn- oder Reinigungsmittel aus der Düse auf oder in die Auftragshilfe übertreten kann, wobei die Auftragshilfe die Oberfläche der Platte oder des Andruckelements berührt.

2. Vorrichtung nach Anspruch 1, **dadurch gekennzeichnet, dass** die Düse eine schlitzförmige Öffnung aufweist.

3. Vorrichtung nach einem der Ansprüche 1 und 2, **dadurch gekennzeichnet, dass** die Auftragshilfe so ausgebildet ist, dass sie Flüssigkeit aufnehmen und wieder abgeben kann und vorzugsweise eine Bürste oder einen Pinsel, einen Schwamm, ein Vlies, ein Gewirke, einen Filz oder ein textiles oder faseriges Flächengebilde darstellt.

4. Vorrichtung nach einem der Ansprüche 1 bis 3, **dadurch gekennzeichnet, dass** die Auftragshilfe einen Mikrofaserstreifen darstellt.

5. Vorrichtung nach einem der Ansprüche 1 bis 4, **dadurch gekennzeichnet, dass** die Auftragseinrichtung federnd mit einem einstellbaren Anpressdruck auf der Platte oder dem Andruckelement aufliegt.

6. Vorrichtung nach einem der Ansprüche 1 bis 5, **dadurch gekennzeichnet, dass** die Auftragseinrichtung zum Auftragen eines Trennmittels auf die Plattenbreitseite dient und - in Transportrichtung der Platte gesehen - vor dem Andruckelement angeordnet ist.

7. Vorrichtung nach einem der Ansprüche 1 bis 5, **dadurch gekennzeichnet, dass** die Auftragseinrichtung zum Auftragen eines Trenn- oder Reinigungsmittels auf das Andruckelement dient und so angeordnet ist, dass die Auftragshilfe auf dem Andruckelement aufliegt.

8. Vorrichtung nach einem der Ansprüche 1 bis 5, **dadurch gekennzeichnet, dass** die Auftragseinrichtung zum Auftragen eines Reinigungsmittels dient und - in Transportrichtung der Platte gesehen - nach dem Andruckelement angeordnet ist.

9. Verfahren zum Anleimen eines Kunststoff- oder Furnierstreifens an die Kante einer Platte aus Kunststoff, Holz oder Holzwerkstoff im Durchlauf, wobei der Kunststoff- oder Furnierstreifen mit Hilfe eines Klebstoffs mit der Kante verbunden und mit einem Andruckelement an die Kante angepresst und anschließend ein über die Kante überstehender Teil des Kunststoff- oder Furnierstreifens mit einem Fräser abgefräst wird, wobei man zur Durchführung dieses Verfahrens eine Vorrichtung nach einem der Ansprüche 1 bis 8 einsetzt.

10. Verfahren nach Anspruch 9, **dadurch gekennzeichnet, dass** man für die Durchführung des Verfahrens eine Vorrichtung nach Anspruch 6 einsetzt und hiermit auf die Plattenbreitseite kantenbündig einen Streifen eines Trennmittels aufträgt, bevor der Kunststoff- oder Furnierstreifen durch das Andruckelement an die Kante der Platte angepresst wird.

11. Verfahren nach Anspruch 9, **dadurch gekennzeichnet, dass** man für die Durchführung des Verfahrens eine Vorrichtung nach Anspruch 7 einsetzt und hiermit auf das Andruckelement ein Trenn- oder Reinigungsmittel aufträgt.

12. Verfahren nach Anspruch 9, **dadurch gekennzeichnet, dass** man für die Durchführung des Verfahrens eine Vorrichtung nach Anspruch 8 einsetzt und hiermit auf die Breitseite der Platte nach Anpressen des Kunststoff- oder Furnierstreifen durch das Andruckelement einen Streifen eines Reinigungsmittel auf die Plattenbreitseite aufträgt.

13. Verfahren nach Anspruch 12, **dadurch gekennzeichnet, dass** man das Reinigungsmittel nach Anpressen des Kunststoff- oder Furnierstreifens mit dem Andruckelement, aber vor dem Abfräsen eines über die Kante überstehenden Teils des Kunststoff- oder Furnierstreifens mit einem Fräser auf die Breitseite der Platte aufträgt.

14. Verfahren nach Anspruch 12, **dadurch gekennzeichnet, dass** man das Reinigungsmittel nach dem Abfräsen eines über die Kante überstehenden Teils des Kunststoff- oder Furnierstreifens mit einem Fräser auf die Breitseite der Platte aufträgt.

## Claims

1. Apparatus for gluing a plastic or veneer strip to the edge of a panel made of plastic, wood or wood material in a continuous process, comprising a strip feed and a pressing element, which is arranged downstream - seen in the transporting direction - and has one or more applicators for separating or cleaning materials, with which a separating or cleaning material can be applied to the upper and lower edge regions of the respective wide side of the panel and/or to the pressing element, **characterized in that** the applicator (1) has a nozzle and an application aid (2), so that the separating or cleaning material can transfer itself from the nozzle onto or into the application aid, the application aid touching the surface of the panel or the pressing element.

2. Apparatus according to Claim 1, **characterized in that** the nozzle has a slit-shaped opening.

3. Apparatus according to either of Claims 1 and 2, **characterized in that** the application aid is formed in such a way that it can take up liquid and release it again and preferably takes the form of a brush or a paintbrush, a sponge, a nonwoven or knitted fabric, a felt or a textile or fibrous sheet-like formation.

4. Apparatus according to one of Claims 1 to 3, **characterized in that** the application aid takes the form of a microfibre strip.

5. Apparatus according to one of Claims 1 to 4, **characterized in that** the applicator rests on the panel or the pressing element resiliently with an adjustable pressing pressure.

6. Apparatus according to one of Claims 1 to 5, **characterized in that** the applicator serves for applying a separating material to the wide side of the panel and is arranged upstream of the pressing element - seen in the transporting direction of the panel.

7. Apparatus according to one of Claims 1 to 5, **characterized in that** the applicator serves for applying a separating or cleaning material to the pressing element and is arranged in such a way that the application aid rests on the pressing element.

8. Apparatus according to one of Claims 1 to 5, **characterized in that** the applicator serves for applying a cleaning material and is arranged downstream of the pressing element - seen in the transporting direction of the panel.

9. Process for continuously gluing a plastic or veneer strip to the edge of a panel made of plastic, wood or wood material, wherein the plastic or veneer strip is bonded to the edge with the aid of an adhesive and pressed onto the edge with a pressing element and subsequently part of the plastic or veneer strip that protrudes beyond the edge is milled off with a milling cutter, wherein an apparatus according to one of Claims 1 to 8 is used for carrying out this process.

10. Process according to Claim 9, **characterized in that** an apparatus according to Claim 6 is used for carrying out the process and in this way a strip of a separating material is applied to the wide side of the panel, flush with the edge, before the plastic or veneer strip is pressed onto the edge of the panel with the pressing element.

11. Process according to Claim 9, **characterized in that** an apparatus according to Claim 7 is used for carrying out the process and in this way a separating or cleaning material is applied to the pressing element.

12. Process according to Claim 9, **characterized in that** an apparatus according to Claim 8 is used for carrying out the process and in this way a strip of a cleaning material is applied to the wide side of the panel after pressing on of the plastic or veneer strip with the pressing element.

13. Process according to Claim 12, **characterized in that** the cleaning material is applied to the wide side of the panel after pressing on of the plastic or veneer strip with the pressing element, but before the milling off of part of the plastic or veneer strip that protrudes beyond the edge with a milling cutter.

14. Process according to Claim 12, **characterized in that** the cleaning material is applied to the wide side of the panel after the milling off of part of the plastic or veneer strip that protrudes beyond the edge with a milling cutter.

## Revendications

1. Dispositif pour coller une bande en matériau synthétique ou en placage sur le bord d'une plaque en matériau synthétique, en bois ou un matériau à base de bois dans un procédé continu avec une alimentation en bande et un élément de pression disposé en aval - dans le sens du transport - qui présente un ou plusieurs dispositifs d'application pour les agents de séparation et de nettoyage, avec lesquels un agent de séparation ou de nettoyage peut être appliqué sur la zone supérieure ou inférieure du bord de chaque côté large de la plaque et/ou sur l'élément de pression, **caractérisé en ce que** le dispositif d'application (1) présente un gicleur et un auxiliaire d'application (2) de manière telle que l'agent de séparation ou de nettoyage peut passer du gicleur sur ou dans l'auxiliaire d'application, l'auxiliaire d'application étant en contact avec la surface de la plaque ou de l'élément de pression.

2. Dispositif selon la revendication 1, **caractérisé en ce que** le gicleur présente une ouverture en forme de fente.

3. Dispositif selon l'une quelconque des revendications 1 à 2, **caractérisé en ce que** l'auxiliaire est réalisé de manière telle qu'il peut absorber et à nouveau libérer un liquide et représente de préférence une brosse ou un pinceau, une éponge, un non-tissé, un tissu, un feutre ou une structure plane en textile ou en fibres.

4. Dispositif selon l'une quelconque des revendications 1 à 3, **caractérisé en ce que** l'auxiliaire d'application est une bande en microfibres.

5. Dispositif selon l'une quelconque des revendications 1 à 4, **caractérisé en ce que** le dispositif d'application est placé avec un effet de ressort et avec une pression de compression réglable sur la plaque ou l'élément de pression.

6. Dispositif selon l'une quelconque des revendications 1 à 5, **caractérisé en ce que** le dispositif d'application sert à appliquer un agent de séparation sur le côté large de la plaque et est disposé en amont de l'élément de pression - dans le sens du transport de la plaque.

7. Dispositif selon l'une quelconque des revendications 1 à 5, **caractérisé en ce que** le dispositif d'application sert à appliquer un agent de séparation ou de nettoyage sur l'élément de pression et est disposé de manière telle que l'auxiliaire d'application est placé sur l'élément de pression.

8. Dispositif selon l'une quelconque des revendications 1 à 5, **caractérisé en ce que** le dispositif d'application sert à appliquer un agent de nettoyage et est disposé en aval de l'élément de pression - dans le sens du transport de la plaque.

9. Procédé pour coller une bande en matériau synthétique ou en placage sur le bord d'une plaque en matériau synthétique, en bois ou en un matériau à base de bois en continu, la bande en matériau synthétique ou en placage étant assemblée à l'aide d'un adhésif avec le bord et comprimée à l'aide d'un élément de pression sur le bord et la partie qui dépasse du bord de la bande en matériau synthétique ou en placage étant ensuite éliminée par fraisage avec une fraise, en utilisant pour la réalisation de ce procédé un dispositif selon l'une quelconque des revendications 1 à 8.

10. Procédé selon la revendication 9, **caractérisé en ce qu'**on utilise pour la réalisation du procédé un dispositif selon la revendication 6 et on applique avec celui-ci sur le côté large de la plaque, de manière affleurante avec le bord, une bande d'un agent de séparation avant que la bande en matériau synthétique ou en placage ne soit pressée par l'élément de pression sur le bord de la plaque.

11. Procédé selon la revendication 9, **caractérisé en ce qu'**on utilise pour la réalisation du procédé un dispositif selon la revendication 7 et on applique avec celui-ci sur l'élément de pression un agent de séparation ou de nettoyage.

12. Procédé selon la revendication 9, **caractérisé en ce qu'**on utilise pour la réalisation du procédé un dispositif selon la revendication 8 et on applique avec celui-ci sur le côté large de la plaque, après pressage de la bande en matériau synthétique ou en placage par l'élément de pression une bande d'un agent de nettoyage sur le bord large de la plaque.

13. Procédé selon la revendication 12, **caractérisé en ce qu'**on applique l'agent de nettoyage sur le côté large de la plaque après le pressage de la bande en matériau synthétique ou en placage avec l'élément de pression, mais avant l'élimination par fraisage d'une partie de la bande en matériau synthétique ou en placage qui dépasse du bord avec une fraise.

14. Procédé selon la revendication 12, **caractérisé en ce qu'**on applique l'agent de nettoyage après l'élimination par fraisage d'une partie de la bande en matériau synthétique ou en placage qui dépasse du bord avec une fraise sur le côté large de la plaque.
